(19) Europäisches Patentamt
European Patent Office
Office européen des brevets

(11) **EP 2 075 947 B1**

(12) **EUROPEAN PATENT SPECIFICATION**

(45) Date of publication and mention
of the grant of the patent:
**07.07.2010 Bulletin 2010/27**

(51) Int Cl.:
***H04L 1/20*** (2006.01)

(21) Application number: **07291651.3**

(22) Date of filing: **28.12.2007**

(54) **Virtual MIMO system method and base station**

Virtuelle MIMO-System Vorrichtung und Basisstation

Procédé et station de base pour un système MIMO virtuel

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**01.07.2009 Bulletin 2009/27**

(73) Proprietor: **Alcatel Lucent**
**75008 Paris (FR)**

(72) Inventors:
• **Wild, Thorsten, Dipl.-Ing.**
**70435 Stuttgart (DE)**
• **Hoek, Cornelis, Dipl.-Ing.**
**71732 Tamm (DE)**

(74) Representative: **Schmidt, Werner Karl**
**Alcatel-Lucent**
**Intellectual Property & Standards**
**70430 Stuttgart (DE)**

(56) References cited:
**US-A1- 2005 281 324**

• **LAN TANG ET AL: "Variable-rate adaptive modulation in mimo systems exploiting multiuser diversity" ACOUSTICS, SPEECH, AND SIGNAL PROCESSING, 2004. PROCEEDINGS. (ICASSP ' 04). IEEE INTERNATIONAL CONFERENCE ON MONTREAL, QUEBEC, CANADA 17-21 MAY 2004, PISCATAWAY, NJ, USA,IEEE, vol. 4, 17 May 2004 (2004-05-17), pages 693-696, XP010718579 ISBN: 978-0-7803-8484-2**

**Description**

**Technical field**

The invention relates to a virtual MIMO system in a mobile communication system and more particularly without limitation to a method of evaluating a virtual MIMO system's quality and to a base station.

**Background and related art**

In radio technologies, multiple input and multiple output or MIMO defines the use of multiple antennas at the transmitter and receiver in order to improve the communication performance. Further, it increases the data throughput and link range without additional bandwidth or transmit power. One of the main functions of MIMO is the spatial multiplexing that splits a high rate signal into multiple lower rate streams, transmitting each stream from a different transmit antenna in the same frequency channel. A MIMO channel can be modeled as having several transmit streams to go through a matrix channel consisting of multiple paths between multiple transmit antennas at the transmitter and multiple receive antennas at the receiver. The receiver gets the signals by multiple receiver antennas and decodes the received signal vectors into the original information.

A special type of MIMO is the so called virtual MIMO that allows a station to transmit or receive signals to or from multiple users in a same band and time simultaneously, even if the transmitter has a single antenna. By sharing the resources between two or more transmitters or mobile devices, the sum throughput of the individual transmitters is incremented. Typically for the uplink, or transmission from a mobile device to a base station, pairs of users can be formed which transmit on the same resources forming the virtual MIMO system. However, more than two users can also be used to form this virtual MIMO system.

The characteristics and parameters of the channels between mobile devices and the Base Station Antennas within the virtual MIMO system can be very different, considerably impacting the performance and the quality of the virtual MIMO system that they have formed. That is, pairs cannot be formed in an arbitrary way and therefore, there is a need of an appropriate method for evaluating the quality of a pairing or a group combination and to apply it in a virtual MIMO system in order to improve the total cell throughput.

Lan Tang et al disclose in "Variable-rate adaptive modulation in MIMO systems exploiting multiuser diversity" (Acoustics, Speech, and Signal Processing, 2004. IEEE International Conference on Montreal, Quebec, Canada 17-21 May 2004, IEEE, vol. 4, 17 May 2004, pages 693-696, ISBN: 978-0-7803-8484-2) an adaptive modulation technique for multiuser MIMO systems with multiuser diversity.

**Summary of the invention**

The present invention provides a method of evaluating a virtual MIMO system's quality of a first group of mobile devices in a base station of a mobile communication system. The mobile communication system further comprises a plurality of mobile devices connected to the base station, the base station is adapted for estimating uplink channel estimation coefficients of each mobile device of the plurality of mobile devices. The method comprises the steps of: selecting at least a first and second mobile device of the plurality of mobile devices; obtaining a first factor by calculating an inverse of the correlation between a first and a second vector, the first vector containing at least a first and second transfer function between the first mobile station and the first and second base station antenna respectively, the second vector containing third and forth transfer functions between the second mobile station and the first and second base station antennas, respectively. The transfer functions are obtained from the uplink channel estimation coefficients.

The mobile communication system may comply with one of the standards such as GSM, UMTS, IEEE 802.11, IEEE 802.16 or 3GPP LTE.

The method further comprises: obtaining a second factor by dividing an autocorrelation of the first vector by an autocorrelation of the second vector. The second factor is descriptive of the average receive power ratio between the first and second mobile devices; and calculating the quality value of the virtual MIMO by combining the first factor and the second factor using an arithmetic operation, the quality value being descriptive of the virtual MIMO system's quality between the first and second mobile devices.

In accordance with an embodiment of the invention, the arithmetic operation is a multiplication, wherein the base station further comprises linear receivers and wherein the second autocorrelation is bigger than the first autocorrelation. The first factor includes a first constant exponent and the second factor includes a second constant exponent.

One of the advantages of the embodiments of the invention is that it describes an optimized method for grouping or pairing mobile devices that are active in a base station. The method is based on the calculation of two factors that have a great impact on the quality of the virtual MIMO system. These two factors are the inverse correlation and the power balancing of the mobile devices that form the virtual MIMO system group. Another advantage is that the calculation of the inverse correlation and the power balancing between the mobile devices uses already available measurement as the channel estimation, that is continuously updated at the base station. The base station receives the information from every mobile device that is active within the cell.

In another aspect, the invention relates to a method of calculating a plurality of virtual MIMO systems groups of mobile devices in a base station of a mobile communication system. The mobile communication system further comprises a plurality of mobile devices connected to the base station. The method comprises the steps of: obtaining a plurality of group candidates, each group candidate comprises at least a first and a second mobile device, the plurality of group candidates comprises all possible combinations among the plurality of mobile devices; calculating a quality value for each group candidate according to one of the embodiments of the invention; sorting the plurality of group candidates according to the calculated quality value from a highest to a lowest quality value; selecting the first group of mobile devices corresponding to the highest quality value; and selecting at least a second group of mobile devices corresponding to a second highest quality value, if the first and second mobile device of the second group is not included on a previous group selection.

In accordance with an embodiment of the invention, the group candidates of the plurality of mobile devices are selected according to a criteria, the criteria being: a signal to interference plus noise ratio SINR threshold and/or scheduling priority of each mobile device.

In accordance with another embodiment of the invention, the selection step of selecting groups of mobile devices is repeated until a maximum number of mobile devices has been grouped.

In accordance with another embodiment of the invention, a discarded group of mobile devices are excluded of the virtual MIMO system, wherein the discarded group contains a second plurality of mobile devices not complying to the criteria and/or have not been grouped.

Another advantage of the embodiments of the invention is that a plurality of mobile devices, that are active in a cell of a base station, are grouped in a plurality of groups of virtual MIMO systems, according to the best characteristics and parameters that optimizes the performance of the virtual MIMO system. The embodiment of the invention calculates the quality value for each possible combination of groups or pairs within a cell of a base station, obtaining the best pairs that offer the highest quality values to form the virtual MIMO system.

In order to reduce the complexity and the calculation time, a criteria may be used to reduce the number of mobile devices to be included in the calculation. This criteria can be based on the signal to noise ratio SNIR of each mobile device and/or the priority of the mobile devices, including the mobile devices that comply with these criteria, whereas the rest of the mobile devices will continue transmitting and communicating with the base station without sharing resources. In that way, the possible combinations of the virtual MIMO systems groups contain only mobile devices with a higher probability of obtaining a good performance within a virtual MIMO system group. After all possible combinations and their quality values have been calculated, the groups are sorted based on the quality value, and the virtual MIMO system groups are created, starting from the group with the highest quality value until no more groups can be formed. Each mobile device may be part of only one virtual MIMO system group and, in the case that they are mobile devices that cannot be grouped, they will continue communicating with the base station in the same way as the mobile devices that do not fulfill the criteria.

In another aspect, the invention relates to a base station of a mobile communication system for calculating a plurality of virtual MIMO systems groups of mobile devices, the mobile communication system further comprising a plurality of mobile devices connected to the base station, the base station being adapted for receiving uplink channel estimation coefficients of each mobile device of the plurality of mobile devices.

The base station comprises: means for selecting at least a first and second mobile device of the plurality of mobile devices and the first group of mobile devices; means for obtaining a first factor by calculating an inverse of the correlation between a first and a second vector, the first vector containing at least a first and second transfer functions between the first mobile station and the first and second base station antenna respectively, the second vector containing third and forth transfer functions between the second mobile station and the first and second base station antennas respectively, and the transfer functions are obtained from the uplink channel estimation coefficients.

The base station further comprises means for obtaining a second factor by dividing an autocorrelation of the first vector by an autocorrelation of the second vector, the second vector being descriptive of an average received power ratio between the first and second mobile device; and means for calculating the quality value of the virtual MIMO by combining the first vector and the second vector using an arithmetic operation, the quality value being descriptive of the virtual MIMO system's quality between the first and second mobile device.

In accordance with an embodiment of the invention, the base station further comprises: means for obtaining a plurality of group candidates of mobile devices, each group candidate comprising at least a first and a second mobile device; means for calculating a quality value for each group candidate according to one of the embodiments of the invention. The method further comprises means for sorting the plurality of group candidates according to the calculated quality value from a highest to a lowest quality value; and means for selecting the first group of mobile devices corresponding to the highest quality value; means for selecting at least a second group of mobile devices corresponding to a second highest quality value if the first and second mobile device is not included on a previous group selection.

In accordance with an embodiment of the invention in the base station, the arithmetic operation is a multiplication, wherein the base station further comprises linear receivers, wherein the second autocorrelation is bigger than the first autocorrelation, wherein the first factor includes the first constant exponent and the second factor includes a second constant exponent.

**Brief description of the drawings**

In the following preferred embodiments of the invention will be described in greater detail by way of example only making reference to the drawings in which:

Figure 1 is a block diagram of a step of calculating a plurality of virtual MIMO systems groups,

Figure 2 is a block diagram of a plurality of group candidates for the virtual MIMO system,

Figure 3 is a block diagram of the calculation of the quality value for each group candidate,

Figure 4 is a block diagram of a selection of groups of mobile devices for the virtual MIMO system,

Figure 5 is a flowchart of an embodiment of the invention,

Figure 6 is a second flowchart of another embodiment of the invention,

Figure 7 is a block diagram of a base station according to an embodiment of the invention.

**Detailed description**

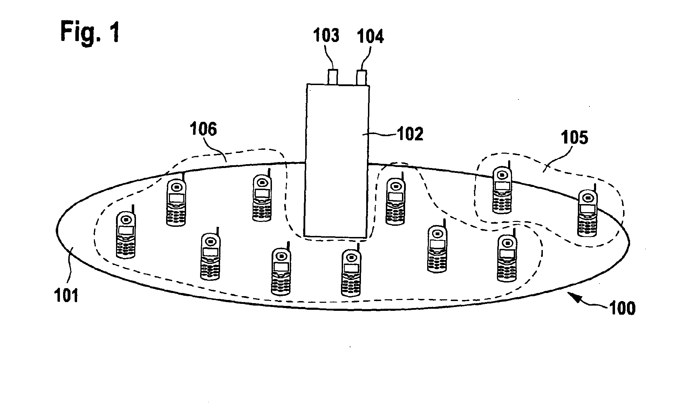

Fig. 1 shows a block diagram of a mobile communication system 100 comprising a plurality of mobile stations 101, a base station 102 and a first and second base station antenna 103 and 104. The plurality of mobile stations 101 are active and coupled to the base station 102. The base station 102 periodically receives from each mobile device pilot symbols, that are used to obtain or update the channel estimation coefficients.

If a base station 102 requires to increase the throughput or the capacity of transmission of the whole cell, a virtual MIMO system can be used in order to share the resources of two or more mobile devices. In order to do so, the base station 102 requires to evaluate and calculate the best possible group combination or pairing for each mobile device that is active within the cell of the base station 102. The first step to calculate a plurality of virtual MIMO systems groups is to discard all mobile devices that do not fulfill the criteria of a virtual MIMO system. The criteria can be, for example, the signal to noise ratio SINR or a previously determined mobile device priority. In the mobile communication system 100, there are a group of mobile devices 105 that do not fulfill these criteria and are not taken into account when calculating the best virtual MIMO systems groups. A second group of mobile devices 106 are selected as candidates to be evaluated as potential virtual MIMO system groups.

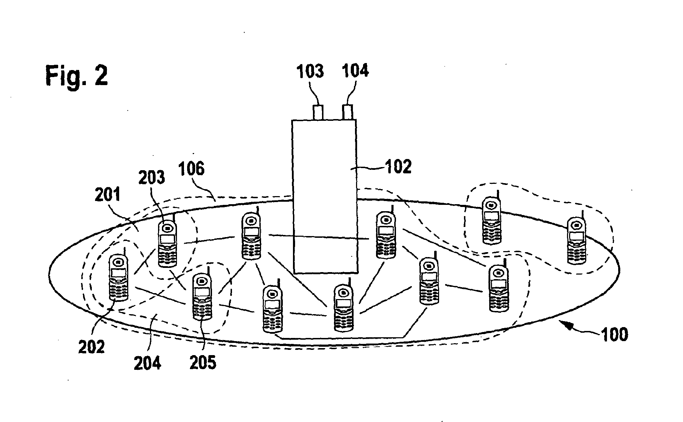

Fig. 2 shows a block diagram with the step of calculating a plurality of virtual MIMO systems groups within a mobile communication system 100. The calculation is made in the base station 102, that further comprises first and second base station antennas 103, 104, and is completed for all the group of mobile devices 106. After the mobile devices that complies with the criteria to be candidates of the virtual MIMO system have been selected, a plurality of group candidates is obtained. Each group candidate is formed of a first and a second mobile device and the group candidate comprises all possible combinations among the group of mobile devices 106. For example, a first group candidate 201 is formed of the mobile devices 202 and 203. At the same time, mobile device 202 is also grouped into the group candidate 204, that is formed by mobile device 202 and 205. This group combination is repeated for all mobile devices that are candidates to be part of a virtual MIMO system.

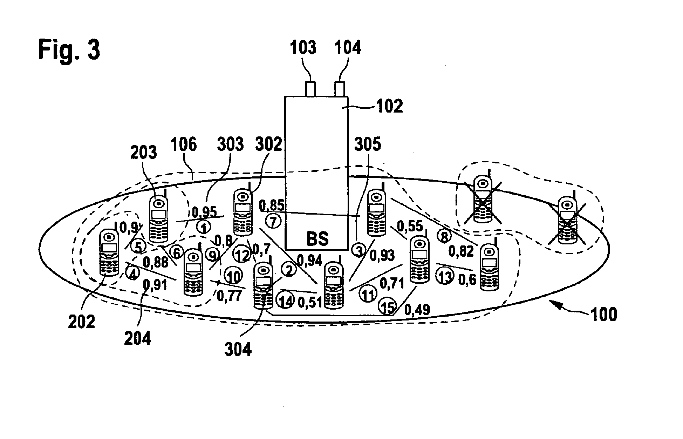

Fig. 3 illustrates a block diagram of a step of calculating a plurality of virtual MIMO systems within a mobile communication system 100, the mobile communication system 100 further comprising base station 102 and base station antennas 103 and 104. The mobile communication system 100 further comprises all mobile devices that have not been previously discarded 106 and the discarded group of mobile devices 105. The fig. 3 represents the plurality of combinations of the mobile devices.

In a further step for calculating a plurality of virtual MIMO systems groups, a quality value for each group candidate is calculated. This quality value weights and defines what are the group candidates with the highest quality value to be grouped in a virtual MIMO system. In order to make a calculation of the virtual MIMO system's quality value a first factor is obtained by calculating the inverse correlation between a first ($\mathbf{h}_{1,n}$) and second vector ($\mathbf{h}_{2,n}$), the first vector containing a first and second transfer function ($h_{1,1,n}$ $h_{1,2,n}$) between the first mobile station (numbered in the first subindex of the transfer functions) 203 and a first and second base station antenna 103 and 104 (numbered in the second subindex of the transfer functions). The second vector contains the transfer functions ($h_{2,1,n}$ $h_{2,2,n}$) between the second mobile station 302 (numbered in the first subindex of the transfer functions) and the base station antennas 103 and 104 (numbered in the second subindex of the transfer functions). These transfer functions are obtained from the channel estimation coefficients from the mobile devices 203 and 302 and received by the base station 102. The first and second vectors (1) and the first factor A calculation (2) may be represented using the following formulas:

$$\begin{pmatrix} \mathbf{h}_{1,n} \\ \mathbf{h}_{2,n} \end{pmatrix} = \begin{pmatrix} h_{1,1,n} & h_{1,2,n} \\ h_{2,1,n} & h_{2,2,n} \end{pmatrix} \quad (1)$$

$$FirstFactor(A) = \frac{1}{\displaystyle\sum_{n=1}^{N} \mathbf{h}_{1,n} \cdot \mathbf{h}_{2,n}^{H}} \quad (2),$$

wherein the n represents the subcarrier number of the calculation, that can be more than one for multi-carrier systems as e.g. OFDM. The formula (2) further represents an average over N subcarriers. The use of the average value is only needed for multi-carrier systems. If needed, the calculation of the First Factor (A) may be normalized on average receive power, resulting in the following formula:

$$FirstFactor(A) = \frac{\frac{1}{2}\displaystyle\sum_{n=1}^{N} \mathbf{h}_{1,n} \cdot \mathbf{h}_{1,n}^{H} + \frac{1}{2}\displaystyle\sum_{n=1}^{N} \mathbf{h}_{2,n} \cdot \mathbf{h}_{2,n}^{H}}{\displaystyle\sum_{n=1}^{N} \mathbf{h}_{1,n} \cdot \mathbf{h}_{2,n}^{H}} \quad (3)$$

Then, a second factor is obtained by dividing a first autocorrelation of the first vector by a second autocorrelation of the second vector, wherein the second autocorrelation is bigger than the first autocorrelation. The second factor is descriptive of an average receive power ratio between the first and the second mobile device and is represented as:

$$SecondFactor(B) = \left\{ \frac{\displaystyle\sum_{n=1}^{N} \mathbf{h}_{1,n} \cdot \mathbf{h}_{1,n}^{H}}{\displaystyle\sum_{n=1}^{N} \mathbf{h}_{2,n} \cdot \mathbf{h}_{2,n}^{H}} \quad , \displaystyle\sum_{n=1}^{N} \mathbf{h}_{2,n} \cdot \mathbf{h}_{2,n}^{H} > \displaystyle\sum_{n=1}^{N} \mathbf{h}_{1,n} \cdot \mathbf{h}_{1,n}^{H} \right. \quad , (4)$$

wherein H is the conjugated transpose of the vector.
Finally the quality value of the virtual MIMO is calculated by combining the first and the second factor using an arithmetic operation depending on the type of receivers in the base station. If the base station 102 includes linear receivers, then the arithmetic operation is a multiplication and the first and the second factor includes a first constant exponent ($\alpha$) and the second factor exponent ($\beta$), respectively. The quality value may be represented as:

$$QualityValue = A^{\alpha} \cdot B^{\beta} \quad (5),$$

wherein the A represents the first factor and B represents the second factor.

This calculation of the quality value is repeated for all the group candidates that have been previously selected. As an example, the group candidate 202 has a quality value of 0,9 and the group candidate 204 has a quality value of 0,91. Then, the plurality of group candidates are sorted based on the calculated quality value from the highest to a lowest quality value, in order to recognize the group candidates that form the best virtual MIMO systems in fig. 3, the best group candidate is 303 and the second biggest quality value is 304. The first group with the highest quality value 303 forms the first virtual MIMO group. The second virtual MIMO group is the second highest quality value group that does not contain a mobile device that has been previously grouped on a virtual MIMO group. In the case of fig. 3, the second highest quality value 304 is formed from mobile device 302, that already forms part of the first virtual MIMO group. Therefore, the second highest quality value 304 cannot be taken into account and the next highest quality value 305 is the next value that will point to the formation of the second virtual MIMO system. This process is repeated for all the subsequent group candidates until no more grouping or pairing is possible.

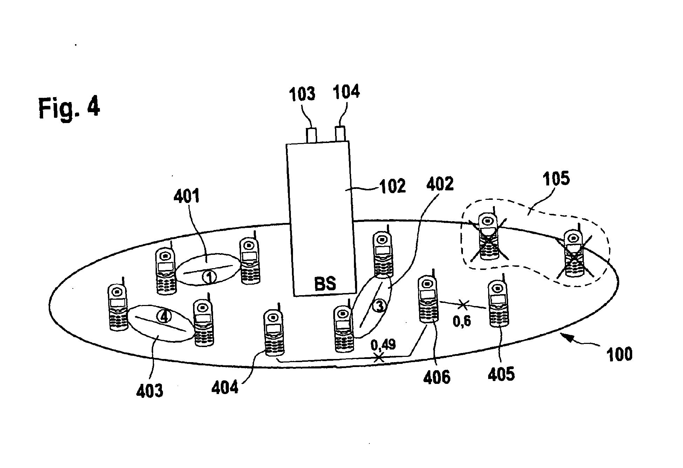

Fig. 4 shows a block diagram of the step of calculating a plurality of virtual MIMO systems groups of a mobile communication system 100 that further comprises a base station 102, base station antennas 103 and 104 and the selected virtual MIMO groups 401, 402 and 403 after they were selected in the step described in fig. 3. The fig. 4 also shows the group of the discarded mobile devices 105 and three further mobile devices that were not grouped into any virtual MIMO group 404, 405 and 406. These three mobile devices 404-406 were not grouped, as the quality values they obtained in their respective group candidates were 0,6 and 0,49, below the minimum quality value criteria of 0,61.

In certain situations the mobile device can not be further grouped, if there are no other devices available. If for example the minimum candidate criteria is 0,5, then the further virtual MIMO group can be formed by the mobile devices 405 and 406, but the mobile device 404 can not form any other group as all other mobile devices are already grouped. In this case, the mobile device 404 forms part of the discarded group of mobile devices without any pairing to form a virtual MIMO group. The rest of the mobile devices that form a virtual MIMO group start sharing the resources, including the frequency allocation, in order to increase the total throughput of transmission from the mobile devices to the base station 102.

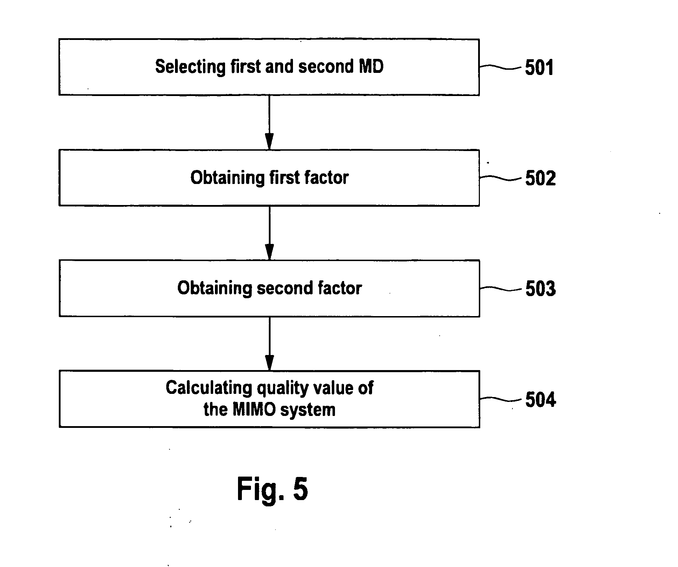

Fig. 5 represents a flowchart of a method of evaluating a virtual MIMO system's quality of a group of mobile devices in the base station of a mobile communication system. The base station is adapted for receiving uplink channel estimation coefficients of each mobile device. The first step 501 selects a first and a second mobile device of the plurality of mobile devices. The second step 502 obtains a first factor by calculating an inverse correlation between a first and a second vector, the first and second vector containing transfer functions between the first and second mobile station and the first and second base station antenna, the transfer function being obtained from the channel estimation coefficients. The third step 503 obtains a second factor by dividing a first autocorrelation of the first vector by a second autocorrelation of the second vector, the second vector being descriptive of an average received power between the first and second mobile device. In a fourth step 504, the quality value of the virtual MIMO is calculated by combining the first and the second factor using an arithmetic operation. This quality value is descriptive of the virtual MIMO system's quality between the first and the second mobile device.

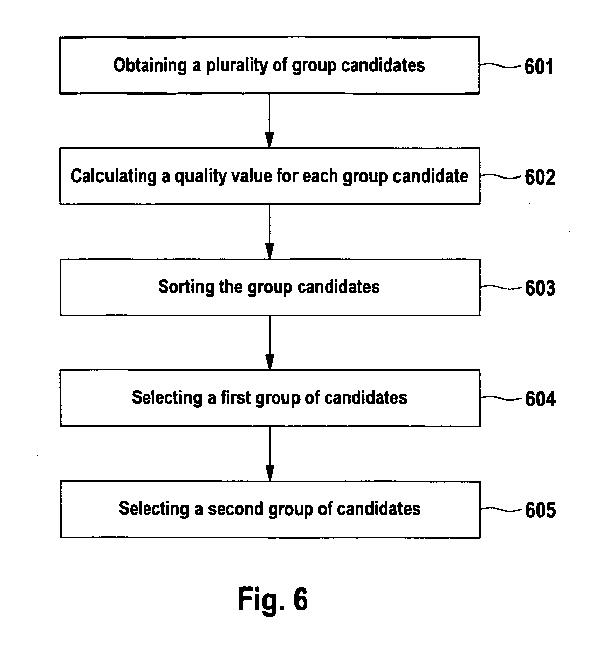

Fig. 6 shows a flowchart of an embodiment of the invention of a method of calculating a plurality of virtual MIMO systems groups of mobile devices in a base station of a mobile communication system. The mobile communication system comprising a plurality of mobile devices coupled to the base station. The method comprises a first step 601 that obtains a plurality of group candidates, each group candidate comprising at least a first and second mobile device and a plurality of group candidates comprising a possible combination among a plurality of mobile devices. The second step 602 calculates a quality value for each group candidate according to the flowchart in fig. 5. The third step 603 sorts a plurality of group candidates according to the calculated quality value from a highest to a lowest quality value. The fourth step 604 selects the first group of mobile devices corresponding to its quality value to form a first virtual MIMO group. The fifth step 605 selects at least a second group of mobile devices corresponding to a second highest quality value to form a second virtual MIMO group, these first and second mobile devices cannot have been included on previous group selections. This step 605 is repeated until all maximum number of mobile devices has been grouped and there are no further possibilities to form more virtual MIMO groups. Alternatively, a threshold on the quality value can be set, so that if a group candidate is below this quality value threshold, then the group candidates are not further regarded and are not able to form virtual MIMO groups.

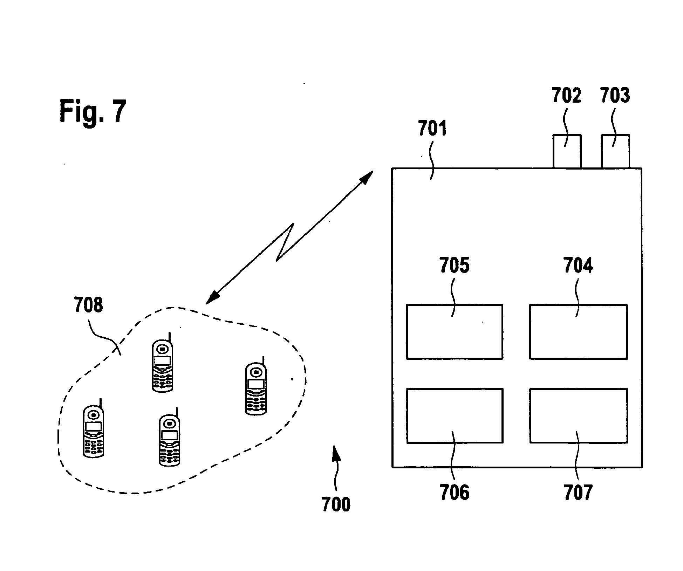

Fig. 7 shows base station 701 of a mobile communication system 100 further comprising a plurality of mobile devices 708. The base station communicates with the plurality of mobile devices 702 using any radio technology as GSM, UMTS, LTE from 3GPP. or WiMax from the 3GPP standard. The base station 701 further comprises a first and second base station antenna 702 and 703 and the means for selecting 704 at least the first and second mobile devices of the plurality of mobile devices as a first group of mobile devices. The base station 700 further comprises means for obtaining a first factor 705 by calculating an inverse correlation between first and second vector; means for obtaining a second factor 706 by dividing a first autocorrelation of the first vector by second autocorrelation of the second vector, the second vector being descriptive of an average receive power ratio between the first and second mobile device; and means for calculating 707 the quality value of the virtual MIMO by combining the first and second factor using an arithmetic operation, the quality value being descriptive of the virtual MIMO system's quality between the first and second mobile device.

**List of Reference Numerals**

| 100 | Mobile communication system |
|-----|-----|
| 101 | Plurality of mobile devices |
| 102 | Base station |
| 103 | First base station antenna |
| 104 | Second base station antenna |
| 105 | Discarded mobile devices |
| 106 | Plurality of candidates of mobile devices |
| 201 | First candidate group |
| 202 | First mobile device |
| 203 | Second mobile device |
| 204 | Second group candidate |
| 205 | Third mobile device |
| 301 | First mobile device |
| 302 | Second mobile device |
| 303 | Highest quality value |
| 304 | Second highest quality value |
| 305 | Third highest quality value |
| 501 | First step |
| 502 | Second step |
| 503 | Third step |
| 504 | Fourth step |
| 601 | First step |
| 602 | Second step |
| 603 | Third step |
| 604 | Fourth step |
| 605 | Fifth step |
| 701 | Base station |
| 702 | First base station antenna |
| 703 | Second base station antenna |
| 704 | Means for selecting |
| 705 | Means for obtaining a first factor |
| 706 | Means for obtaining a second factor |
| 707 | Means for calculating the quality value |
| 708 | Plurality of mobile devices |

**Claims**

1. A method of evaluating at a base station the quality of a virtual MIMO system which is formed by grouping from a plurality of mobile devices at least two mobile devices (101) to share resources for transmitting or receiving information from a base station (102), said base station (102) being adapted for estimating uplink channel estimation coefficients of each mobile device of said plurality of mobile devices (101), said method comprising the steps of:

    - selecting at least a first (202) and second mobile device (203) of said plurality of mobile devices (101);
    - obtaining a first factor by calculating the inverse of the correlation between a first and a second vector, said first vector containing at least a first and second transfer functions between said first mobile device and a first (103) and second base station antennas respectively (104), said second vector containing at least third and fourth transfer functions between said second mobile device (203) and said first and second base station antennas respectively (103-104), said transfer functions obtained from said uplink channel estimation coefficients;
    - obtaining a second factor by dividing an autocorrelation of said first vector, hereafter referred to as first autocorrelation, by an autocorrelation of said second vector, hereafter referred to as second autocorrelation, said second factor being descriptive of an average receive power ratio between said first and second mobile device (202-203);
    - calculating said quality value of said virtual MIMO by combining said first factor and said second factor using an arithmetic operation, said quality value being descriptive of the quality of a virtual MIMO system that comprises said first (202) and second mobile device (203).

2. A method as in claim 1, wherein said arithmetic operation is a multiplication, wherein said second autocorrelation is bigger than said first autocorrelation, wherein said first factor includes a first constant exponent and said second factor includes a second constant exponent.

3. A method as in claim 1 or claim 2, the method further comprising the steps of:

    - obtaining a plurality of group candidates (601), each group candidate comprising at least a first (202) and a second mobile device (203), said plurality of group candidates comprising all possible combinations among said plurality of mobile devices (101);
    - calculating a quality value for each group candidate (602) according to claim 1;
    - sorting said plurality of group candidates (603) according to said calculated quality value from a highest (303) to a lowest quality value;
    - selecting a first group of mobile devices (604) corresponding to said highest quality value (401) to form first virtual MIMO group;
    - selecting at least a second group of mobile devices (605) corresponding to a second highest quality value (402) to form a second virtual MIMO group, if said first and second mobile device of said second group is not included on a previous group selection.

4. A method as in claim 3, wherein said group candidates of said plurality of mobile devices (101) are selected according to a criteria, said criteria being: a SINR threshold and/or a scheduling priority of each mobile device.

5. A method as in claim 3, wherein said selection step of selecting a group of mobile devices is repeated until a maximum number of mobile devices has been grouped.

6. A method as in claim 4 or claim 5, a discarded group of mobile devices are excluded of said virtual MIMO system, wherein said discarded group contains a second plurality of mobile devices not complying said criteria or/and has not been grouped.

7. A base station (701) of a mobile communications system (700) for calculating a plurality of groups of mobile devices of a virtual MIMO system, which is formed by grouping from a plurality of mobile devices at least two mobile devices to share resources for transmitting or receiving information from the base station, said mobile communication system (700) further comprising a plurality of mobile devices (708) coupled to said base station (701), said base station (701) being adapted for estimating uplink channel estimation coefficients of each mobile device of said plurality of mobile devices (708), said base station (701) comprising:

    - means for selecting (704) at least a first and second mobile device of said plurality of mobile devices as a first group of mobile devices;

- means for obtaining a first factor (705) by calculating the inverse of the correlation between a first and a second vector, said first vector containing at least a first and second transfer functions between said first mobile device and a first (702) and second base station antenna respectively (703), said second vector containing at least third and fourth transfer functions between said second mobile device and said first (702) and second base station antennas respectively (703), said transfer functions obtained from said uplink channel estimation coefficients;

- means for obtaining a second factor (706) by dividing an autocorrelation of said first vector, hereafter referred to as first autocorrelation, by an autocorrelation of said second vector, hereafter referred to as second autocorrelation, said second factor being descriptive of an average receive power ratio between said first and second mobile device;

- means for calculating (707) said quality value of said virtual MIMO by combining said first factor and said second factor using an arithmetic operation, said quality value being descriptive of the quality of a virtual MIMO system that comprises said first and second mobile device.

**8.** A base station as in claim 7 further comprising:

- means for obtaining a plurality of group candidates of mobile devices, each group candidate comprising at least a first (202) and a second mobile device (203);
- means for calculating a quality value for each group candidate according to claim 1;
- sorting said plurality of group candidates according to said calculated quality value from a highest (303) to a lowest quality value;
- means for selecting a first group of mobile devices corresponding to said highest quality value (401);
- means for selecting at least a second group of mobile devices corresponding to a second highest quality value (402) if said first and second mobile device is not included on a previous group selection.

**9.** A base station as in claim 7, said arithmetic operation is a multiplication, wherein said base station further comprises linear receivers, wherein said second autocorrelation is bigger than said first autocorrelation, wherein said first factor includes a first constant exponent and said second factor includes a second constant exponent.

**10.** A base station as in claim 7, wherein said group candidates of said plurality of mobile devices (101) are selected according to a criteria, said criteria being: a SINR threshold and/or a scheduling priority of each mobile device.

**Patentansprüche**

**1.** Ein Verfahren zur Beurteilung, an einer Basisstation, der Qualität eines virtuellen MIMO-Systems, welches durch das Gruppieren von mindestens zwei Mobilgeräten (101) aus einer Mehrzahl von Mobilgeräten gebildet wird, um Ressourcen für die Übertragung oder den Empfang von Informationen von einer Basisstation (102) zu teilen, wobei die besagte Basisstation (102) dazu ausgelegt ist, die Schätzungskoeffizienten des Uplink-Kanals eines jeden Mobilgeräts der besagten Mehrzahl von Mobilgeräten (101) zu schätzen, wobei das Verfahren die folgenden Schritte umfasst:

- Auswählen mindestens eines ersten (202) und eines zweiten Mobilgeräts (203) aus der besagten Mehrzahl von Mobilgeräten (101);
- Erhalten eines ersten Faktors durch Berechnen der Inversen der Korrelation zwischen einem ersten und einem zweiten Vektor, wobei der besagte erste Vektor mindestens eine erste und eine zweite Transferfunktion zwischen dem besagten ersten Mobilgerät und jeweils einer ersten (103) und einer zweiten Basisstationsantenne (104) enthält, wobei der besagte zweite Vektor mindestens eine dritte und eine vierte Transferfunktion zwischen dem besagten zweiten Mobilgerät (203) und jeweils der besagten ersten und der besagten zweiten Basisstationsantenne (103-104) enthält, wobei die besagten Transferfunktionen aus den besagten Schätzungskoeffizienten des Uplink-Kanals erhalten werden;
- Erhalten eines zweiten Faktors durch Dividieren einer Autokorrelation des besagten ersten Vektors, im Folgenden erste Autokorrelation genannt, durch eine Autokorrelation des besagten zweiten Vektors, im Folgenden zweite Autokorrelation genannt, wobei der besagte zweite Faktor ein durchschnittliches Empfangsleistungsverhältnis zwischen dem besagten ersten und dem besagten Mobilgerät (202-203) darstellt;
- Berechnen des besagten Qualitätswertes des besagten virtuellen MIMO-Systems durch Kombinieren des besagten ersten Faktors und des besagten zweiten Faktors unter Verwendung einer arithmetischen Operation, wobei der besagte Qualitätswert die Qualität eines virtuellen MIMO-Systems, welches jeweils das besagte erste (202) und das besagte zweite Mobilendgerät (203) umfasst, darstellt.

2. Ein Verfahren nach Anspruch 1, wobei die besagte arithmetische Operation eine Multiplikation ist, wobei die besagte zweite Autokorrelation größer als die besagte erste Autokorrelation ist, wobei der besagte erste Faktor einen ersten konstanten Exponenten und der besagte zweite Faktor einen zweiten konstanten Exponenten beinhaltet.

3. Ein Verfahren nach Anspruch 1 oder Anspruch 2, wobei das Verfahren weiterhin die folgenden Schritte umfasst:

- Erhalten einer Mehrzahl von Gruppenkandidaten (601), wobei jeder Gruppenkandidat mindestens ein erstes (202) und ein zweites Mobilgerät (203) umfasst, wobei die besagte Mehrzahl von Gruppenkandidaten alle möglichen Kombinationen unter der besagten Mehrzahl von Mobilgeräten (101) umfasst;
- Berechnen eines Qualitätswertes für jeden Gruppenkandidaten (602) nach Anspruch 1;
- Einstufen der besagten Mehrzahl von Gruppenkandidaten (603) gemäß dem besagten berechneten Qualitätswert von einem höchsten (303) zu einem niedrigsten Qualitätswert;
- Auswählen einer ersten Gruppe von Mobilgeräten (604), welche dem besagten höchsten Qualitätswert (401) entspricht, um eine erste virtuelle MIMO-Gruppe zu bilden;
- Auswählen mindestens einer zweiten Gruppe von Mobilgeräten (605), welche einem zweithöchsten Qualitätswert (402) entspricht, um eine zweite virtuelle MIMO-Gruppe zu bilden, wenn das besagte erste und das besagte zweite Mobilgerät der besagten zweiten Gruppe nicht in einer vorherigen Gruppenauswahl inbegriffen ist.

4. Ein Verfahren nach Anspruch 3, wobei die besagten Gruppenkandidaten der besagten Mehrzahl von Mobilgeräten (101) gemäß einem Kriterium ausgewählt werden, wobei das besagte Kriterium das folgende ist: ein SINR-Grenzwert und/oder eine Planungspriorität eines jeden Mobilgerätes.

5. Ein Verfahren nach Anspruch 3, wobei der Auswahlschritt für das Auswählen einer Gruppe von Mobilgeräten so lange wiederholt wird, bis eine maximale Anzahl von Mobilgeräten gruppiert worden sind.

6. Ein Verfahren nach Anspruch 4 oder Anspruch 5, wobei eine verworfene Gruppe von Mobilgeräten aus dem besagten virtuellen MIMO-System ausgeschlossen wird, wobei die besagte verworfene Gruppe eine zweite Mehrzahl von Mobilgeräten umfasst, welche den Kriterien nicht entsprechen oder/und nicht gruppiert wurden.

7. Eine Basisstation (701) eines mobilen Kommunikationssystems (700) zum Berechnen einer Mehrzahl von Gruppen von Mobilgeräten eines virtuellen MIMO-Systems, welches durch das Gruppieren von mindestens zwei Mobilgeräten einer Mehrzahl von Mobilgeräten gebildet wird, um Ressourcen für die Übertragung oder den Empfang von Informationen von der Basisstation zu teilen, wobei das besagte mobile Kommunikationssystem (700) weiterhin eine Mehrzahl von an die besagte Basisstation (701) gekoppelten Mobilgeräten (708) umfasst, wobei die besagte Basisstation (701) dazu ausgelegt ist, die Schätzungskoeffizienten des Uplink-Kanals eines jeden Mobilgeräts der besagten Mehrzahl von Mobilgeräten (708) zu schätzen, wobei die besagte Basisstation (701) umfasst:

- Mittel zum Auswählen (704) mindestens eines ersten und eines zweiten Mobilgeräts aus der besagten Mehrzahl von Mobilgeräten als eine erste Gruppe von Mobilgeräten;
- Mittel zum Erhalten eines ersten Faktors (705) durch Berechnen der Inversen der Korrelation zwischen einem ersten und einem zweiten Vektor, wobei der besagte erste Vektor mindestens eine erste und eine zweite Transferfunktion zwischen dem besagten ersten Mobilgerät und jeweils einer ersten (702) und einer zweiten Basisstationsantenne (703) enthält, wobei der besagte zweite Vektor mindestens eine dritte und eine vierte Transferfunktion zwischen dem besagten zweiten Mobilgerät und jeweils der besagten ersten (702) und der besagten zweiten Basisstationsantenne (703) enthält, wobei die besagten Transferfunktionen aus den besagten Schätzungskoeffizienten des Uplink-Kanals erhalten werden;
- Mittel zum Erhalten eines zweiten Faktors (706) durch Dividieren einer Autokorrelation des besagten ersten Vektors, im Folgenden erste Autokorrelation genannt, durch eine Autokorrelation des besagten zweiten Vektors, im Folgenden zweite Autokorrelation genannt, wobei der besagte zweite Faktor ein durchschnittliches Empfangsleistungsverhältnis zwischen dem besagten ersten und dem besagten Mobilgerät darstellt;
- Mittel zum Berechnen (707) des besagten Qualitätswertes des besagten virtuellen MIMO-Systems durch Kombinieren des besagten ersten Faktors und des besagten zweiten Faktors unter Verwendung einer arithmetischen Operation, wobei der besagte Qualitätswert die Qualität eines virtuellen MIMO-Systems, welches jeweils das besagte erste und das besagte zweite Mobilendgerät umfasst, darstellt.

8. Eine Basisstation nach Anspruch 7, weiterhin umfassend:

   - Mittel zum Erhalten einer Mehrzahl von Mobilgeräte-Gruppenkandidaten, wobei jeder Gruppenkandidat mindestens ein erstes (202) und ein zweites Mobilgerät (203) umfasst;
   - Mittel zum Berechnen eines Qualitätswertes für jeden Gruppenkandidaten nach Anspruch 1;
   - Mittel zum Einstufen der besagten Mehrzahl von Gruppenkandidaten gemäß dem besagten berechneten Qualitätswert von einem höchsten (303) zu einem niedrigsten Qualitätswert;
   - Mittel zum Auswählen einer ersten Gruppe von Mobilgeräten, welche dem besagten höchsten Qualitätswert (401) entspricht;
   - Mittel zum Auswählen mindestens einer zweiten Gruppe von Mobilgeräten, welche einem zweithöchsten Qualitätswert (402) entspricht, wenn das besagte erste und das besagte zweite Mobilgerät nicht in einer vorherigen Gruppenauswahl inbegriffen ist.

9. Eine Basisstation nach Anspruch 7, wobei die besagte arithmetische Operation eine Multiplikation ist, wobei die besagte Basisstation weiterhin lineare Empfänger umfasst, wobei die besagte zweite Autokorrelation größer als die besagte erste Autokorrelation ist, wobei der besagte erste Faktor einen ersten konstanten Exponenten und der besagte zweite Faktor einen zweiten konstanten Exponenten enthält.

10. Eine Basisstation nach Anspruch 7, wobei die besagten Gruppenkandidaten der besagten Mehrzahl von Mobilgeräten (101) gemäß einem Kriterium ausgewählt werden, wobei das besagte Kriterium das folgende ist: ein SINR-Grenzwert und/oder eine Planungspriorität eines jeden Mobilgerätes.

## Revendications

1. Procédé d'évaluation, au niveau d'une station de base, de la qualité d'un système MIMO virtuel formé en regroupant au moins deux dispositifs mobiles (101) parmi une pluralité de dispositifs mobiles afin de partager des ressources pour la transmission ou la réception d'informations à partir d'une station de base (102), ladite station de base (102) étant adaptée pour estimer des coefficients d'estimation de voie montante de chacun des dispositifs mobiles de ladite pluralité de dispositifs mobiles (101), ledit procédé comprenant les étapes de :

   - sélection d'au moins un premier (202) et un deuxième dispositifs mobiles (203) de ladite pluralité de dispositifs mobiles (101) ;
   - obtention d'un premier facteur en calculant l'inverse de la corrélation entre un premier et un deuxième vecteurs, ledit premier vecteur contenant au moins une première et une deuxième fonctions de transfert entre ledit premier dispositif mobile et une première (103) et une deuxième antennes de station de base respectivement, ledit deuxième vecteur contenant au moins une troisième et une quatrième fonctions de transfert entre ledit deuxième dispositif mobile (203) et lesdites première et deuxième antennes de station de base respectivement (103-104), lesdites fonctions de transfert étant obtenues à partir desdits coefficients d'estimation de voie montante ;
   - obtention d'un deuxième facteur en divisant une autocorrélation dudit premier vecteur, appelée ci-après première autocorrélation, par une autocorrélation dudit deuxième vecteur, appelée ci-après deuxième autocorrélation, ledit deuxième facteur décrivant un rapport moyen de puissance de réception entre lesdits premier et deuxième dispositifs mobiles (202-203);
   - calcul de ladite valeur de qualité dudit MIMO virtuel en combinant ledit premier facteur et ledit deuxième facteur à l'aide d'une opération arithmétique, ladite valeur de qualité décrivant la qualité d'un système MIMO virtuel comprenant lesdits premier (202) et deuxième dispositifs mobiles (203).

2. Procédé selon la revendication 1, dans lequel ladite opération arithmétique est une multiplication, dans lequel ladite deuxième autocorrélation est supérieure à ladite première autocorrélation, dans lequel ledit premier facteur comprend un premier exposant constant et ledit deuxième facteur comprend un deuxième exposant constant.

3. Procédé selon la revendication 1 ou 2, le procédé comprenant en outre les étapes de :

   - obtention d'une pluralité de candidats de groupe (601), chaque candidat de groupe comprenant au moins un premier (202) et un deuxième dispositifs mobiles (203), ladite pluralité de candidats de groupe comprenant toutes les combinaisons possibles parmi ladite pluralité de dispositifs mobiles (101) ;
   - calcul d'une valeur de qualité pour chaque candidat de groupe (602) selon la revendication 1 ;
   - tri de ladite pluralité de candidats de groupe (603) selon ladite valeur de qualité calculée de la valeur la plus élevée (303) à la valeur la plus faible ;
- sélection d'un premier groupe de dispositifs mobiles (604) correspondant à ladite valeur la plus élevée (401) pour former ledit premier groupe MIMO virtuel ;
- sélection d'au moins un deuxième groupe de dispositifs mobiles (605) correspondant à une deuxième valeur la plus élevée (402) pour former un deuxième groupe MIMO virtuel, si lesdits premier et deuxième dispositifs mobiles dudit deuxième groupe ne sont pas inclus dans une sélection de groupe antérieure.

4. Procédé selon la revendication 3, dans lequel lesdits candidats de groupe de ladite pluralité de dispositifs mobiles (101) sont sélectionnés selon un critère, ledit critère étant : un seuil SINR et/ou une priorité de planification de chacun des dispositifs mobiles.

5. Procédé selon la revendication 3, dans lequel ladite étape de sélection d'un groupe de dispositifs mobiles est répétée jusqu'à ce qu'un nombre maximal de dispositifs mobiles ait été regroupé.

6. Procédé selon la revendication 4 ou 5, un groupe de dispositifs mobiles mis à l'écart est exclu dudit système MIMO virtuel, dans lequel ledit groupe mis à l'écart contient une deuxième pluralité de dispositifs mobiles non conforme audit critère ou/et qui n'a pas été regroupée.

7. Station de base (701) d'un système de communications mobile (700) pour calculer une pluralité de groupes de dispositifs mobiles d'un système MIMO virtuel, qui est formée en regroupant au moins deux dispositifs mobiles parmi une pluralité de dispositifs mobiles afin de partager des ressources pour la transmission ou la réception d'informations à partir de la station de base, ledit système de communications mobile (700) comprenant en outre une pluralité de dispositifs mobiles (708) couplée à ladite station de base (701), ladite station de base (701) étant adaptée pour estimer des coefficients d'estimation de liaison montante de chacun des dispositifs mobiles de ladite pluralité de dispositifs mobiles (708), ladite station de base (701) comprenant :

- moyens de sélection (704) d'au moins un premier et un deuxième dispositifs mobiles de ladite pluralité de dispositifs mobiles comme un premier groupe de dispositifs mobiles ;
- moyens d'obtention d'un premier facteur (705) en calculant l'inverse de la corrélation entre un premier et un deuxième vecteurs, ledit premier vecteur contenant au moins une première et une deuxième fonctions de transfert entre ledit premier dispositif mobile et une première (702) et une deuxième antennes de station de base respectivement (703), ledit deuxième vecteur contenant au moins une troisième et une quatrième fonctions de transfert entre ledit deuxième dispositif mobile et lesdites première (702) et deuxième antennes de station de base respectivement (703), lesdites fonctions de transfert étant obtenues à partir desdits coefficients d'estimation de voie montante ;
- moyens d'obtention d'un deuxième facteur (706) en divisant une autocorrélation dudit premier vecteur, appelée ci-après première autocorrélation, par une autocorrélation dudit deuxième vecteur, appelée ci-après deuxième autocorrélation, ledit deuxième facteur décrivant un rapport moyen de puissance de réception entre lesdits premier et deuxième dispositifs mobiles ;
- moyens de calcul (707) de ladite valeur de qualité dudit MIMO virtuel en combinant ledit premier facteur et ledit deuxième facteur à l'aide d'une opération arithmétique, ladite valeur de qualité décrivant la qualité d'un système MIMO virtuel comprenant lesdits premier et deuxième dispositifs mobiles.

8. Station de base selon la revendication 7, comprenant en outre :

- moyens d'obtention d'une pluralité de candidats de groupe de dispositifs mobiles, chaque candidat de groupe comprenant au moins un premier (202) et un deuxième dispositif mobile (203) ;
- moyens de calcul d'une valeur de qualité pour chaque candidat de groupe selon la revendication 1 ;
- moyens de tri de ladite pluralité de candidats de groupe selon ladite valeur de qualité calculée de la valeur la plus élevée (303) à la valeur la plus faible ;
- moyens de sélection d'un premier groupe de dispositifs mobiles correspondant à ladite valeur de qualité la plus élevée (401) ;
- moyens de sélection d'au moins un deuxième groupe de dispositifs mobiles correspondant à une deuxième valeur de qualité la plus élevée (402) si lesdits premier et deuxième dispositifs mobiles ne sont pas inclus dans une sélection de groupe antérieure.

9. Station de base selon la revendication 7, ladite opération arithmétique étant une multiplication, dans lequel ladite station de base comprend en outre des récepteurs linéaires, dans lequel ladite deuxième autocorrélation est supérieure à ladite première autocorrélation, dans lequel ledit premier facteur comprend un premier exposant constant et ledit deuxième facteur comprend un deuxième exposant constant.

10. Station de base selon la revendication 7, dans lequel lesdits candidats de groupe de ladite pluralité de dispositifs mobiles (101) sont sélectionnés selon un critère, ledit critère étant : un seuil SINR et/ou une priorité de planification de chacun des dispositifs mobiles.

**Fig. 1**

# Fig. 2

**Fig. 3**

Fig. 4

EP 2 075 947 B1

**Fig. 5**

| Obtaining a plurality of group candidates | 601 |

↓

| Calculating a quality value for each group candidate | 602 |

↓

| Sorting the group candidates | 603 |

↓

| Selecting a first group of candidates | 604 |

↓

| Selecting a second group of candidates | 605 |

# Fig. 6

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Lan Tang et al.** Variable-rate adaptive modulation in MIMO systems exploiting multiuser diversity. *Acoustics, Speech, and Signal Processing, 2004. IEEE International Conference on Montreal,* 17 May 2004, vol. 4, ISBN 978-0-7803-8484-2, 693-696